# EUROPÄISCHE PATENTSCHRIFT

(11) **EP 2 656 771 B1**
(45) Veröffentlichungstag und Bekanntmachung des Hinweises auf die Patenterteilung: **15.07.2015**
(21) Anmeldenummer: 13164276.1
(22) Anmeldetag: 18.04.2013
(51) Int. Cl.: A47L 15/42

(54) **Spülmaschine und Verfahren zur Wasseraufbereitung in einer Spülmaschine**
Dishwasher and method for water treatment in a dishwasher
Lave-vaisselle et procédé de production d'eau chaude dans un lave-vaisselle

(30) Priorität: 27.04.2012 DE 102012008886
(43) Veröffentlichungstag der Anmeldung: 30.10.2013
(73) Patentinhaber: WINTERHALTER GASTRONOM GMBH, 88074 Meckenbeuren (DE)
(72) Erfinder: Duden, Roman, 88048 Friedrichshafen (DE); Hutschneider, Peter, 88069 Tettnang (DE); Löw, Markus, 88276 Berg (DE)
(74) Vertreter: Appelt, Christian W.

(56) Entgegenhaltungen:
- EP-A2- 0 873 714
- DE-A1- 4 401 411
- DE-A1-102006 011 640

## Beschreibung

Die vorliegende Erfindung bezieht sich auf eine Spülmaschine und ein Verfahren zur Wasseraufbereitung in einer Spülmaschine und insbesondere auf eine gewerblich genutzte Spülmaschine, bei der zugeführtes Wasser mit einem Ionentauscher aufbereitet wird.

### Beschreibung

Spülmaschinen können entweder auf spezifische Anwendungsgebiete spezialisiert sein (wie z.B. das Reinigen von Geschirr, Gläsern, Töpfen etc.), so dass sie für den betreffenden Zweck sehr gute Reinigungsresultate erzielen, oder sie sind vielseitig einsetzbar, wobei dann oft Abstriche hinsichtlich der Resultate in Kauf zu nehmen sind. Zu der letzteren Gruppe gehören insbesondere die im privaten Umfeld eingesetzten Spülmaschinen, während gewerblich genutzte Spülmaschinen zumeist zur ersten Gruppe gehören. Wegen des speziellen Einsatzgebietes werden daher insbesondere bei den gewerblich genutzten Spülmaschinen hohe Anforderungen an das genutzte Wasser gestellt.

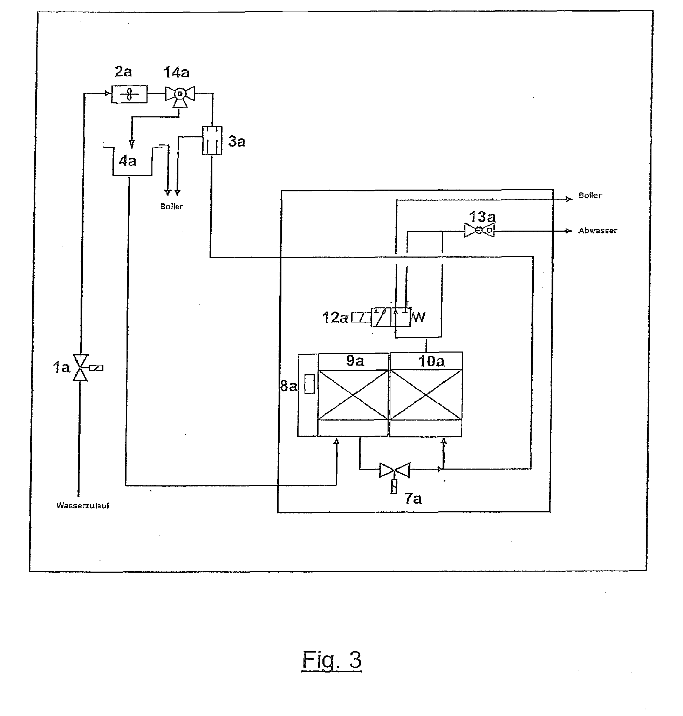

Die Figur 3 zeigt beispielsweise eine Spülmaschine mit einer konventionellen Abwasseraufbereitungseinrichtung. Über einen Wasserzulauf gelangt das Rohwasser (z.B. Leitungswasser) über ein Zulaufmagnetventil 1a in eine Volumenmesseinrichtung 2a. Daran anschließend wird mittels eines Kugelventils 14a ein Teil des Wassers aus dem Wasserzulauf einer Regenerierwasservorlage 4a zugeführt und der Hauptteil gelangt über eine wassertechnische Sicherheitseinrichtung 3a in einen Ionentauscher 10a. In einem normalen Betriebsmodus gelangt das dem Ionentauscher 10a zugeführte Wasser über ein Abwasserumschaltventil 12a zu einem Boiler, wo es entsprechend erwärmt und anschließend zur Reinigung des Spülgutes verwendet wird. Außerdem weist die Spülmaschine einen Regeneriermittelbehälter 9a auf, der mit dem Ionentauscher 10a über eine Leitung, entlang derer ein Regenerierventil 7a ausgebildet ist, in Verbindung steht. Der Regeneriermittelbehälter 9a steht außerdem mit der Regenerierwasservorlage 4a in fluider Verbindung, wobei die Regenerierwasservorlage 4a geodätisch auf einem höheren Niveau angeordnet ist als der Regeneriermittelbehälter 9a.

Hierbei und im Folgenden werden als fluide Verbindungen Leitungen bezeichnet, die einen gerichteten Fluss eines Mediums wie beispielsweise Wassers oder Luft zwischen verschiedenen Elementen ermöglichen. Sie können beispielsweise aus Metall, Plastik oder einem flexiblen Material wie Gummi bestehen. Als Ionentauscher wird eine Komponente bezeichnet, die im Betrieb aus dem Wasser die Kationen (beispielsweise die Härtebildner wie Kalzium oder Magnesium) gegen Wasserstoffionen (H⁺) oder gegen Natriumionen (Na⁺) aus dem Ionentauscher austauscht, so dass die Wasserhärte beim Passieren des Ionentauschers verringert wird.

Zusätzlich zu dem beschriebenen normalen Betriebsmodus ist die Spülmaschine der Fig. 3 ebenfalls in einem Regeneriermodus betreibbar, wobei in dem Regeneriermodus das Zulaufmagnetventil 1a geschlossen, das Regenerierventil 7a geöffnet und das Abwasserumschaltventil 12a die Verbindung zu dem Boiler trennt und stattdessen den Ionentauscher mit einem Abwasseranschluss verbindet. Während des Regeneriermodus wird somit der Wasserzulauf unterbrochen und Wasser wird aus der Regenerierwasservorlage 4a dem Regeneriermittelbehälter 9a zugeführt. In dem Regeneriermodus wird das Wasser aus dem Ionentauscher 10a über einen Rückflussverhinderer 13a einer Abwasserleitung zugeführt.

Daher wird in dem Regeneriermodus zumindest teilweise das Wasser aus der Regenerierwasservorlage 4a entnommen und dem Regeneriermittelbehälter 9a zugeführt und dort mit einem Regeneriermittel vermischt und anschließend über das Regenerierventil 7a dem Ionentauscher 10a zugeführt. Die durch die Mischung des Regeneriermittels mit dem Wasser aus der Wasservorlage 4a entstandene Lösung wird dann in dem Ionentauscher 10 genutzt, um eine Regenerierung des Ionentauschers 10a zu bewirken. Außerdem weist die Spülmaschine, wie sie in der Figur 3 gezeigt ist, eine Abwasserüberbrückung (Bypass) auf, der den Ionentauscher 10a direkt mit dem Rückflussverhinderer 13a verbindet, ohne dass der entsprechende Wasserfluss das Abwasserumschaltventil 12a passieren muss.

Eine weitere konventionelle Spülmaschine ist in DE 10 2006 011 640 A1 offenbart, bei der ebenfalls ein Ionentauscher unter Nutzung einer internen Regenerierwasservorlage, die mit Leitungswasser entsprechend befüllt wird, periodisch regeneriert werden kann.

Die Spülmaschine, wie sie in der Figur 3 gezeigt ist, weist eine Reihe von Nachteilen auf. So wird z. B. in der Regenerierwasservorlage 4a unbehandeltes Rohwasser benutzt, um es währen des Regeneriermodus dem Regeneriermittelbehälter 9a zuzuführen. Da das Rohwasser jedoch eine hohe Wasserhärte aufweist, führt dies dazu, dass eine geringe Menge Regeneriermittel gelöst werden kann und somit mehr Regeneriermittellösung als erforderlich verwendet wird. Darüber hinaus ist das genutzte Kugelventil 14a als auch das Abwasserumschaltventil 12a eine potentielle Störquelle, da beide Ventile ein Umschalten zwischen verschiedenen Wegen bewirken und nicht einfach durch ein Öffnen oder Schließen aktiviert/deaktiviert werden. Ein weiterer Nachteil der konventionelle Spülmaschine besteht darin, dass zur Besolung des Ionentauschers 10a eine Mindesthöhe der Regenerierwasservorlage 4a in Bezug auf den Regeneriermittelbehälter 9a bzw. dem Ionentauscher 10a erforderlich ist, um das Wasser aus der Wasservorlage 4a über den geodätischen Höhenunterschied (= entlang des Gravitationskraftfeldes gemessene Höhe) in den Ionentauscher selbständig fließen zu lassen. Derartige geodätische Verfahren erwiesen sich oft als unzureichend. Z.B. können Verschmutzungen in den Leitungen den Fluss beeinträchtigen, so dass der Fluss nicht mehr mit der erforderlichen Strömungsgeschwindigkeit den Ionentauscher 10a erreicht. Als Folge ist der Regeneriervorgang, der beispielsweise über eine vorbestimmte Zeit abläuft, unvollständig.

Es ist daher die Aufgabe der vorliegenden Erfindung, eine Spülmaschine und ein Verfahren zur Wasseraufbereitung in einer Spülmaschine bereitzustellen, die die zuvor genannten Nachteile aus dem Stand der Technik überwindet und dadurch eine zuverlässigen und effiziente Wasseraufbereitung innerhalb einer Spülmaschine gewährleistet.

Diese Aufgabe wird durch eine Spülmaschine nach Anspruch 1 und ein Verfahren zur Wasseraufbereitung in einer Spülmaschine nach Anspruch 14 gelöst.

Gemäß der vorliegenden Erfindung weist eine Spülmaschine einen Anschluss für einen Wasserzulauf, einen Abwasseranschluss, einen Ionentauscher (z.B. ein Kationentauscher) und eine Regenerierwasservorlage auf. Der Ionentauscher hat einen Einlass, der mit dem Anschluss für den Wasserzulauf verbunden ist, und einen Auslass. Der Ionentauscher ist ferner ausgebildet, um Wasser aus dem Einlass durch Ionentausch aufzubereiten und das aufbereitete Wasser über den Auslass auszugeben. Die Regenerierwasservorlage ist mit dem Auslass des Ionentauschers verbunden, um einen Teil des aufbereiteten Wassers von dem Ionentauscher zu erhalten. Ferner weist die Spülmaschine einen Regeneriermittelbehälter für ein Regeneriermittel auf, wobei der Regeneriermittelbehälter mit der Regenerierwasservorlage und dem Ionentauscher verbunden ist und beispielsweise einen Flüssigkeitsfluss zwischen ihnen ermöglicht. Außerdem ist der Regeneriermittelbehälter ausgebildet ist, um unter Nutzung des Teils des aufbereiteten Wassers aus der Regenerierwasservorlage das Regeneriermittel als Regenerierlösung dem Ionentauscher zur Regenerierung zuzuführen. Schließlich ist der Ionentauscher ausgebildet, um nach der Regenerierung Reste der Regenerierlösung über den Abwasseranschluss abzuleiten.

Somit wird bei der Spülmaschine gemäß der vorliegenden Erfindung nicht Rohwasser, sondern aufbereitetes Wasser der Regenerierwasservorlage zugeführt und anschließend genutzt, um das Regeneriermittel zu lösen. Damit wird eine höhere Effizienz des Regenerierungsprozesses des Ionentauschers erreicht, als dies bei der Spülmaschine aus dem Stand der Technik möglich wäre. Ein weiterer Vorteil der vorliegenden Erfindung besteht darin, dass ein Verkalken der Regenerierwasservorlage auf Grund der Verwendung von aufbereitetem ("reinem") Wasser vermieden wird und die Verdunstung (wegen der Wärme in der Spülmaschine) keine nachteiligen Auswirkungen hat.

Bei weiteren Ausführungsbeispielen weist die Spülmaschine eine Pumpe auf, die ausgebildet ist, um das aufbereitete Wasser aus der Regenerierwasservorlage in den Regeneriermittelbehälter zu pumpen und bei Entleerung der Regenerierwasservorlage Luft in den Regeneriermittelbehälter zu pumpen, um den Regeneriermittelbehälter durch die eingepumpte Luft zu entleeren. Bei weiteren Ausführungsbeispielen sind die Pumpe beispielsweise eine Besolungspumpe und/oder eine Verdrängungspumpe, die entlang einer fluiden Verbindung auf niedrigerem Niveau als die Regenerierwasservorlage angeordnet ist.

Dieses Ausführungsbeispiel bietet den Vorteil, dass die Regenerierwasservorlage unabhängig von der Höhe des Ionentauschers bzw. des Regeneriermittelbehälters angeordnet werden kann, da kein Höhenunterschied für den Wassertransport zwischen der Regenerierwasservorlage und dem Regeneriermittelbehälter bzw. dem Ionentauscher erforderlich ist. Da außerdem die Pumpe ausgebildet ist, um sowohl Wasser als auch Luft zu pumpen, bietet dieses Ausführungsbeispiel den Vorteil, dass die Luft gleichzeitig genutzt werden kann, um eine Entleerung des Regeneriermittelbehälters und/oder des Ionentauschers zu bewirken. Die ohnehin früher oder später stark verdünnte Regenerierlösung ist für die Regenerierung nicht mehr zu gebrauchen und wird daher mit der Entleerung vollständig entsorgt. Weitere Ausführungsbeispiele stellen aus diesem Grund eine automatische Entleerung bereit. Da die Pumpe auch Luft pumpen kann, braucht die Pumpe nicht auf dem geodätisch niedrigsten Niveau angeordnet zu werden. Wenn sie allerdings auf dem geodätisch niedrigsten Niveau entlang des Wasserflusses zwischen der Regenerierwasservorlage und dem Regeneriermittelbehälter angeordnet wird, bringt dies den Vorteil, dass eine vollständige Flüssigkeitsentleerung leicht erreicht wird. Außerdem kann beim Pumpen der Luft, die aufsteigende Luft in Stromabwärtsrichtung den Fluidfluss von der Regenerierwasservorlage zu dem Regeneriermittelbehälter unterstützen.

Bei weiteren Ausführungsbeispielen weist die Spülmaschine optional ein Zulaufventil und/oder ein Gutwasserventil und/oder ein Abwasserventil auf. Das Zulaufventil ist beispielsweise zwischen dem Wasserzulauf und dem Einlass des Ionentauschers angeordnet. Das Gutwasserventil ist beispielsweise zwischen dem Ionentauscher und der Regenerierwasservorlage angeordnet. Das Abwasserventil ist beispielsweise zwischen dem Ionentauscher und dem Abwasseranschluss angeordnet. Damit wird es möglich, dass über ein Betätigen des Zulaufventils und/oder des Gutwasserventils und/oder des Abwasserventils der Ionentauscher selektiv mit der Regenerierwasservorlage oder dem Abwasseranschluss oder dem Wasserzulauf verbindbar ist.

Hierbei und im Folgenden beziehen sich Anordnungen (z.B. wenn ein Element zwischen zwei Komponenten angeordnet ist) nicht notwendigerweise auf deren räumliche Beziehung zueinander. Vielmehr beziehen sich die Anordnungen auf den Fluidfluss von beispielsweise Wasser oder Luft entlang der fluiden Verbindungen (z.B. der entsprechenden Leitung). Daher bedeutet, dass ein Element zwischen zwei Komponenten angeordnet ist, dass die eine Komponente stromaufwärts liegt, währenddessen die andere Komponente stromabwärts angeordnet ist.

Ein Vorteil der verschiedenen Ventile ist, dass bei weiteren Ausführungsbeispielen die Flussrichtungen (oder Flusspfade) selektiv geschaltet werden können. Ein Flusspfad ermöglicht den Wasserfluss vom Wasserzulauf zu dem Ionentauscher und den Fluss des aufbereiteten Wassers von dem Ionentauscher zur Regenerierwasservorlage. Ein weiterer Flusspfad ermöglicht einen Fluss des aufbereiteten Wasser von der Regenerierwasservorlage zum Regenerierbehälter und anschließend zum Ionentauscher und danach ins Abwasser. Die genutzten Ventile können beispielsweise einfache Magnetventile umfassen, die entweder geschlossen oder geöffnet sind, so dass auf komplexere Dreiwegeventile verzichtet werden kann und eine höhere Stabilität und Zuverlässigkeit der Wasseraufbereitung erreicht wird. Außerdem haben die einzelnen Kreisläufe die vorteilhafte Wirkung, dass eine bessere Dosierung unter Vermeidung von Vermischungen von Rohwasser und aufbereitetem Wasser erreicht wird.

Bei weiteren Ausführungsbeispielen weist die Spülmaschine einen Boiler auf, der in Flussrichtung des aufbereiteten Wassers hinter dem Gutwasserventil angeordnet ist, um das aufbereitete Wasser von dem Ionentauscher zu erhalten. Daher wird lediglich ein Teil des aufbereiteten Wassers des Ionentauschers der Regenerierwasservorlage zugeführt und ein Großteil bzw. ein Hauptteil des aufbereiteten Wassers wird zur Reinigung des Geschirrs nutzbar.

Bei weiteren Ausführungsbeispielen weist die Spülmaschine optional eine Kontrolleinheit auf, wobei die Kontrolleinheit ausgebildet ist, um über eine Steuerung der Pumpe und/oder des Zulaufventils und/oder des Gutwasserventils und/oder des Abwasserventils die Spülmaschine selektiv in einen von drei Modi zu betreiben: einen Betriebsmodus, einen Besolungsmodus (oder Regeneriermodus) und einen Entleerungsmodus. In dem Betriebsmodus ist die Kontrolleinheit ausgebildet, um das Zulaufventil und das Gutwasserventil zu öffnen, wobei das Abwasserventil geschlossen ist, so dass Wasser aus dem Wasserzulauf dem Ionentauscher zugeführt wird und aufbereitetes Wasser dem Boiler und/oder der Regenerierwasservorlage zugeführt wird. In dem Besolungsmodus ist die Kontrolleinheit ausgebildet, um das Zulaufventil als auch das Gutwasserventil zu schließen und das Abwasserventil zu öffnen, so dass aufbereitetes Wasser aus der Regenerierwasservorlage in den Regeneriermittelbehälter mit der Pumpe gepumpt werden kann und so die Regenerierlösung dem Ionentauscher zur Regenerierung zugeführt wird. In dem Entleerungsmodus ist die Kontrolleinheit ausgebildet, um sowohl das Zulaufventil als auch das Gutwasserventil zu schließen und das Abwasserventil zu öffnen, so dass der Teil des aufbereiteten Wassers und daran anschließend Luft von der Regenerierwasservorlage in den Regeneriermittelbehälter mit der Pumpe gepumpt werden kann, um so den Regeneriermittelbehälter über den Ionentauscher zu entleeren.

Dieses Ausführungsbeispiel bietet somit den Vorteil, dass unter Nutzung der entsprechenden Ventile und der trennbaren Flusspfade die Spülmaschine einfach und zuverlässig in verschiedenen Modi betrieben werden kann, die dadurch gekennzeichnet sind, dass jeweils einer der verschiedenen Wasserpfade geöffnet ist und ein Fluidfluss zwischen den einzelnen Komponenten bewirkt wird. Die verbleibenden Pfade sind geschlossen. Die Kontrolleinheit kann dabei entweder automatisch betrieben werden oder auch manuell durch einen Nutzer derart gesteuert werden, dass der Nutzer selektiv einen der drei Modi aktivieren und deaktivieren kann.

Durch die Regenerierung verbraucht sich das Regeneriermittel in dem Regeneriermittelbehälter zunehmend. Bei weiteren Ausführungsbeispielen ist die Kontrolleinheit daher optional ausgebildet, um die Spülmaschine dann in dem Entleerungsmodus zu betreiben, wenn eine Menge oder Konzentration des Regeneriermittels in dem Regeneriermittelbehälter unterhalb eines Schwellenwertes gefallen ist. Dieses Ausführungsbeispiele bietet den Vorteil, dass durch Erfassung der Lösungskonzentration der Regenerierlösung in dem Regeneriermittelbehälter ein automatisches Aktivieren des Entleerungsmodus möglich wird, so dass der Nutzer unmissverständlich davon Kenntnis erlangt, dass eine Erneuerung des Regeneriermittels für den weiteren Betrieb erforderlich ist. Der Schwellenwert kann derart festgelegt werden, dass eine Mindestkonzentration der Regeneriermittellösung in dem Regeneriermittelbehälter aufrecht erhalten wird, der noch eine zuverlässige Regenerierung des Ionentauschers bewirkt. Optional ist dieser Schwellenwert manuell durch den Nutzer einstellbar, so dass in Abhängigkeit von dem Geschirrgut eine Mindestwasserenthärtung sichergestellt werden kann. Bei diesen Ausführungsbeispielen ist es ferner vorteilhaft, dass die Pumpe Luft pumpt, so dass eine teilweise Entleerung des Regeneriermittelbehälters in diesem Fall ermöglicht wird. Somit kann das Regeneriermittel eingefüllt werden, ohne dass Regeneriermittellösung austritt oder überläuft.

Bei weiteren Ausführungsbeispielen ist optional zwischen dem Wasserzulauf und dem Ionentauscher ein Volumenmesser und/oder eine wassertechnische Sicherheitseinrichtung und/oder ein Rückflussverhinderer angeordnet. Der Volumenmesser ist beispielsweise ausgebildet, um eine dem Ionentauscher zugeführte Wassermenge zu messen (z.B. unter Nutzung eines einfachen Flügelrades). Dies bietet den Vorteil, dass damit eine zuverlässige Dosierung ermöglicht wird. Die wassertechnische Sicherheitseinrichtung ist eine typische bautechnische Maßnahme, mit der sichergestellt wird, dass selbst bei Abfall des Wasserdruckes in dem Wasserzulauf (beispielsweise dem öffentlichen Leitungssystem) kein Rückfluss in das Leitungssystem möglich ist, so dass eine damit verbundene Verschmutzung verhindert wird.

Bei weiteren Ausführungsbeispielen weist die Regenerierwasservorlage und/oder die wassertechnische Sicherheitseinrichtung jeweils einen Überlauf auf, der optional mit dem Boiler verbunden ist. Durch die Ausbildung dieses Überlaufes in der Regenerierwasservorlage wird es möglich, sämtliches Wasser effektiv zu nutzen und nicht bereits aufbereitetes Wasser aus der Regenerierwasservorlage bei Überschreiten eines oberen Füllstandes dem Abwasser zuzuführen, sondern stattdessen zuviel zugeführtes aufbereitetes Wasser ebenfalls dem Boiler zuzuführen.

Der Rückflussverhinderer bietet beispielsweise den Vorteil, dass ein Rückfluss in die wassertechnische Sicherheitseinrichtung verhindert wird, so dass eine doppelte Absicherung besteht. Außerdem wird damit sicher gestellt, dass ein Rückfluss auch im Besolungsmodus verhindert wird, so dass bei aktiver Pumpe die Regeneriermittellösung in den Ionentauscher gepumpt wird, nicht aber in Richtung zu dem Wasserzulauf - dieser Wasserpfad soll während des Regeneriermodus zuverlässig unterbrochen sein. Bei der konventionellen Spülmaschine, wie sie in der Fig. 3 gezeigt ist, ist eine solche Doppelsicherung nicht gegeben.

Bei weiteren Ausführungsbeispielen ist der Ionentauscher optional ein saurer Kationentauscher, der ausgebildet ist, um mittels eines Natriumsalzes oder einer organischen Säure als Regeneriermittel regeneriert zu werden. Ein Vorteil dieses Ausführungsbeispieles besteht darin, dass Natriumsalz oder organische Säuren sehr leicht und günstig zur Verfügung stehen.

Bei weiteren Ausführungsbeispielen weist der Regeneriermittelbehälter optional eine Messeinrichtung (z.B. einen Schwimmer) auf, um die Regeneriermittelkonzentration in der Regenerierlösung in dem Regeneriermittelbehälter zu messen. Kontrolleinheit ist weiter optional ausgebildet, um bei Unterschreiten der Regeneriermittelkonzentration unterhalb eines Schwellenwertes (z.B. einer Soll-Konzentration) den Entleerungsmodus zu starten. Dies kann entweder automatisch oder nach manueller Bestätigung durch den Nutzer geschehen. Vorteile dieses Ausführungsbeispieles bestehen darin, dass der Schwimmer ein einfaches und sicheres Mittel ist, um eine Salz- bzw. Säurekonzentration in einer Flüssigkeit zu messen (beispielsweise über den veränderten Auftrieb des Schwimmers in der entsprechenden Lösung), so dass eine zuverlässige und günstige Möglichkeit gegeben ist, eine automatische Steuerung der Spülmaschine bzw. der Wasseraufbereitung zu ermöglichen. Die Konzentration der Regeneriermittellösung hat ebenfalls Einfluss auf die elektrischen Eigenschaften (wie z.B. die Leitfähigkeit) und/oder die optischen Eigenschaften (z.B. die Durchlässigkeit). Daher wird optional anstatt oder zusätzlich zu dem Schwimmer eine (elektrische) Leitfähigkeitsmessung und/oder ein optisches Messverfahren genutzt, um die Regeneriermittelkonzentration in der Regenerierlösung in dem Regeneriermittelbehälter zu ermitteln.

Bei weiteren Ausführungsbeispielen ist zwischen dem Regeneriermittelbehälter und dem Ionentauscher optional eine fluide Verbindung mit einem Regenerierventil ausgebildet, wobei die Kontrolleinheit ferner optional ausgebildet ist, um das Regenerierventil während des Besolungsmodus und/oder während des Entleerungsmodus zu öffnen und ansonsten geschlossen zu halten. Vorteile dieses Ausführungsbeispiels bestehen darin, dass eine sichere Trennung zwischen dem Regenerierkreislauf (während des Regeneriermodus) und dem normalen Wasserkreislauf (während des Betriebsmodus) sicherzustellen. Ein einfaches Ventil ist außerdem ein zuverlässiges und günstiges Mittel, um über die Kontrolleinheit die Verbindung der beiden Wasserpfade entweder zu ermöglichen oder zu unterbrechen. Alternativ dazu können der Regeneriermittelbehälter und der Ionentauscher direkt intern miteinander verbunden sein, wobei entlang der internen Verbindung ebenfalls ein Ventil zum Öffnen oder Schließen einer entsprechenden Flüssigkeitsverbindung optional ausgebildet sein kann.

Die vorliegende Erfindung bezieht sich ebenfalls auf ein Verfahren zur Wasseraufbereitung in einer Spülmaschine mit einer Regenerierwasservorlage, einem Regeneriermittelbehälter für ein Regeneriermittel und einem Ionentauscher, wobei das Verfahren folgende Schritte umfasst: Aufbereiten von Wasser in dem Ionentauscher durch einen Austausch von Ionen, Weiterleiten des aufbereiteten Wassers zu der Regenerierwasservorlage, Speichern von aufbereitetem Wasser in der Regenerierwasservorlage, Weiterleiten des aufbereiteten Wassers von der Regenerierwasservorlage zu dem Regeneriermittelbehälter, Mischen des Regeneriermittels mit dem aufbereiteten Wasser, so dass eine Regeneriermittellösung erzeugt wird, Verdrängen der Regeneriermittellösung durch das aufbereitete Wasser und Regenerieren des Ionentauschers durch Einleiten der Regeneriermittellösung in den Ionentauscher. Das Mischen und Verdrängen wird beispielsweise parallel ablaufen, so dass bereits beim Zuführen des aufbereiten Wassers die Verdrängung erfolgt.

Somit unterscheiden sich Ausführungsbeispiele der vorliegenden Erfindung von der konventionellen Spülmaschine, wie sie in der Figur 3 gezeigt ist, insbesondere durch die folgenden Aspekte. Die Regenerierwasservorlage wird bei der vorliegenden Erfindung über einen Teilstrom des Gutwassers befüllt, währenddessen beim konventionellen Verfahren die Befüllung mit unbehandeltem Rohwasser über ein Kugelventil erfolgte. Außerdem erfolgt die Besolung des Ionentauschers beim konventionellen Verfahren geodätisch durch Öffnen des Regenerierventils 7a und eine Verdrängung der Regeneriermittellösung aus dem Regeneriermittelbehälter durch Wasser aus der Regenerierwasservorlage 4a. Das erfindungsgemäße Verfahren verwendet beispielsweise eine Besolungs- und Verdrängungspumpe inklusive eines optionalen Rückflussverhinderers und ermöglicht daher eine genauere und präzisere Dosierung der Befüllung. Schließlich erfolgte die Umschaltung zwischen Gutwasser und Abwasser bei dem konventionellen Verfahren mittels eines Abwasserumschaltventils 12a inklusive eines kleinen Abwasserbypasses, währenddessen bei Ausführungsbeispielen der vorliegenden Erfindung hierfür zwei getrennte Ventile in Form eines Gutwasserventils und eines Abwasserventils eingesetzt werden.

Die Erfindung wird nachfolgend bezugnehmend auf die beiliegenden Zeichnungen näher beschrieben, wobei:
- Figur 1: eine Spülmaschine nach einem Ausführungsbeispiel der vorliegenden Erfindung zeigt;
- Figur 2: eine Spülmaschine mit optionalen Komponenten nach weiteren Ausführungsbeispielen der vorliegenden Erfindung zeigt; und
- Figur 3: eine konventionelle Spülmaschine zeigt.

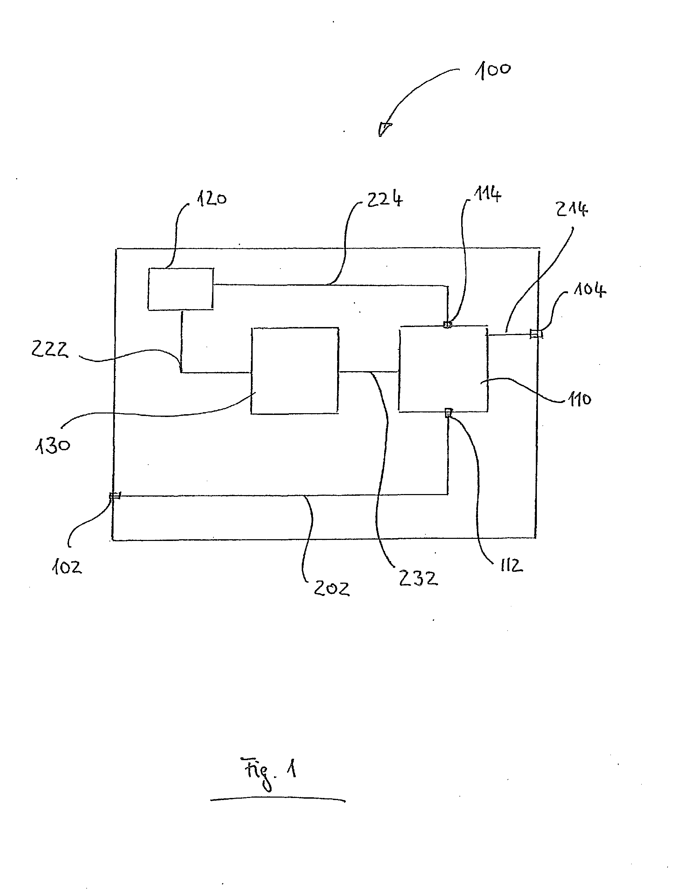

Figur 1 zeigt eine Spülmaschine 100 mit einem Anschluss 102 für einen Wasserzulauf, einem Abwasseranschluss 104, einem Ionentauscher 110 mit einem Einlass 112, der mit dem Anschluss 102 für den Wasserzulauf über eine erste fluide Verbindung 202 verbunden ist, und einem Auslass 114. Der Ionentauscher 110 ist ausgebildet, um Wasser aus dem Einlass 112 durch Ionentausch aufzubereiten und das aufbereitete Wasser über den Auslass 114 auszugeben. Ferner weist die Spülmaschine 100 eine Regenerierwasservorlage 120 auf, die mit dem Auslass 114 über eine zweite fluide Verbindung 224 verbunden ist, um einen Teil des aufbereiteten Wassers von dem Ionentauscher 110 zu erhalten. Die Spülmaschine 100 weist weiter einen Regeneriermittelbehälter 130 für ein Regeneriermittel auf, wobei der Regeneriermittelbehälter 130 mit der Regenerierwasservorlage 120 und dem Ionentauscher 110 über eine dritte und eine vierte fluide Verbindung 222, 232 verbunden und fluid dazwischen angeordnet ist. Der Regeneriermittelbehälter 130 ist ausgebildet, um unter Nutzung des Teils des aufbereiteten Wassers aus der Regenerierwasservorlage 120 das Regeneriermittel als Regenerierlösung dem Ionentauscher 110 zur Regenerierung zuzuführen (indem beispielsweise Wasserstoffionen oder Natriumionen dem Ionentauscher 110 zugeführt werden). Der Ionentauscher 110 ist ausgebildet, um nach der Regenerierung Reste der Regenerierlösung über den Abwasseranschluss 104 abzuleiten. Der Abwasseranschluss 104 kann optional mit dem Auslass 114 fluid verbunden sein oder mit einem separaten Ausgang des Ionentauschers 110 über eine fünfte fluide Verbindung 214 verbunden sein.

Somit umfasst die Erfindung ein Verfahren zur Wasseraufbereitung, insbesondere für gewerbliche Spülmaschinen, wobei das der Spülmaschine zugeführte Wasser in dem Ionentauscher 110 in einem in der Spülmaschine integrierten Behälter aufbereitet wird. Bei der Aufbereitung werden die im zufließenden Wasser enthaltenen Kationen (vorwiegend Kalzium- und Magnesiumionen) gegen die am beispielhaften Kationentauscher angelagerten Natrium- bzw. Wasserstoffionen ausgetauscht. Daher weist das aufbereitete Wasser beispielsweise eine geringere Wasserhärte auf als das Rohwasser (z.B. aus der öffentlichen Wasserversorgung). Der Ionentauscher 110 wird intermittierend mit einem Regeneriermittel (beispielsweise Natriumchloridlösung oder eine organische Säurelösung wie beispielsweise Amidosulfonsäure) regeneriert, wobei das Regeneriermittel in einem entsprechenden Regeneriermittelbehälter 130 in der Spülmaschine bevorratet ist.

Die Regenerierwasservorlage 120 kann beispielsweise als Behälter mit einem Fassungsvermögen von 0,1 - 1 Liter (oder ungefähr 200 ml) ausgebildet sein.

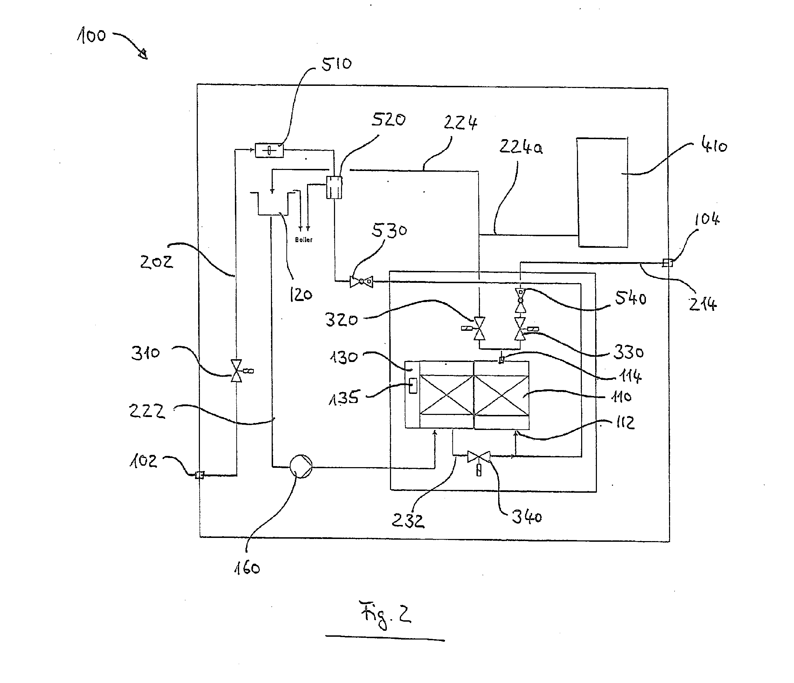

Figur 2 zeigt weitere Ausführungsbeispiele der vorliegenden Erfindung mit weiteren optionalen Komponenten, die einzeln oder in beliebigen Kombinationen zu dem in der Figur 1 gezeigten Ausführungsbeispiel hinzugefügt werden können.

Bei der Spülmaschine, wie sie die Figur 2 zeigt, ist der Anschluss 102 für den Wasserzulauf mit dem Einlass 112 mit der ersten fluiden Verbindung 202 derart verbunden, dass entlang der ersten fluiden Verbindung 202 ein Zulaufmagnetventil 310, ein Volumenmesser 510, eine wassertechnische Sicherheitseinrichtung 520 und einem Rückflussverhinderer 530 angeordnet sind. Entlang der zweiten fluiden Verbindung 224 zwischen dem Auslass 114 des Ionentauschers 110 und der Regenerierwasservorlage 120 ist bei dem in der Figur 2 gezeigten Ausführungsbeispiel ein Gutwasserventil 320 angeordnet, und entlang der dritten fluide Verbindung 222 zwischen der Regenerierwasservorlage 120 und dem Regeneriermittelbehälter 130 ist eine Pumpe 160 angeordnet. Außerdem ist zwischen dem Regeneriermittelbehälter 130 und dem Ionentauscher 110 entlang der vierten fluiden Verbindung 232 ein Regenerierventil 340 ausgebildet, welches den Fluss entlang der vierten fluiden Verbindung 232 öffnet oder schließt. Schließlich ist die fünfte fluide Verbindung 214 zum Abwasseranschluss 104 nicht mit einem separaten Anschluss des Ionentauschers 110 verbunden, sondern mit dem Auslass 114 verbunden, wobei entlang der fünften fluiden Verbindung 214 ein Abwasserventil 330 und ein weiterer Rückflussverhinderer 540 angeordnet sind.

Außerdem ist ein Boiler 410 mit der zweiten fluiden Verbindung 224 zwischen dem Gutwasserventil 320 und der Regenerierwasservorlage 120 über eine fluide Abzweigung 224a verbunden. Optional ist der Boiler 410 ebenfalls über eine fluide Verbindung mit Überlaufeinrichtungen der Regenerierwasservorlage 120 und/oder der wassertechnischen Sicherungseinrichtung 520 verbunden. Die wassertechnische Sicherungseinrichtung 520 kann beispielsweise als Luftfalle ausgebildet sein.

Der Regeneriermittelbehälter 130 weist optional eine Messeinrichtung 135 (z.B. einen Schwimmer) auf, die ausgebildet ist, um einen Lösungskonzentration der Regeneriermittellösung in dem Regeneriermittelbehälter 130 zu erfassen, um darauf basierend ein Signal beispielsweise für eine Kontrolleinheit (nicht in der Fig. 2 gezeigt) bereitzustellen. Die Kontrolleinheit ist ausgebildet, um alle oder ein Teil der zuvor genannten Ventile selektiv zu öffnen bzw. zu schließen, um dadurch verschiedene Flusspfade bereitzustellen, wovon ein erster Flusspfad den Wasserzulauf 102 mit dem Ionentauscher 110 und daran anschließend mit dem Boiler 410 fluid verbindet. Ein zweiter Flusspfad führt von der Wasservorlage 120 über die Pumpe 160, den Regeneriermittelbehälter 130 und daran anschließend über das Regenerierventil 340 zu dem Ionentauscher 110, wobei gleichzeitig eine fluide Verbindung von dem Auslass 114 über das Abwasserventil 330 zu dem Abwasseranschluss 104 bereitstellt wird.

Die Funktionsweise der erfindungsgemäßen Spülmaschine lässt sich somit wie folgt beschreiben. Das aufzubereitende Wasser fließt über ein oft in gewerblichen Spülmaschinen existierendes Zulaufmagnetventil 310 aus dem bauseitigen Wasseranschluss der Maschine zu. Das Volumen des über den Ionentauscher 110 (der beispielsweise ein schwach bzw. stark sauerer Kationentauscher sein kann) fließende Wasser wird über eine Volumenmessung in dem Volumenmesser 510 (beispielsweise ein Flügelradzähler) erfasst, passiert die wassertechnische Sicherheitseinrichtung 520 und gelangt über einen zusätzlichen Rückflussverhinderer 530 in den Ionentauscher 110. Über das Gutwasserventil 320 gelangt das aufbereitete Wasser in den Boiler 410 der gewerblichen Spülmaschine und mit einem Bypass (zweite fluide Verbindung 224) in die Regenerierwasservorlage 120. Der Rückflussverhinderer 530 verhindert beispielsweise, dass durch die Pumpe 160 kein Wasser zurück ins Leitungssystem oder zur wassertechnischen Sicherungseinrichtung 520 gepumpt wird. Damit kann die Pumpe 160 ihre gesamte Pumpleistung nutzen, um den Fluidfluss hin zum Ionentauscher 110 and anschließend zum Abwasseranschluss 104 zu pumpen.

Um nach Erschöpfung des Ionentauschers 110 eine Regeneration desselbigen durchzuführen, wird aufbereitetes Wasser aus der Regenerierwasservorlage 120 mit einer beispielhaften Besolungspumpe und Verdrängungspumpe 160 in den Regeneriermittelbehälter 130 gefördert. Die verdrängte, flüssige Regeneriermittellösung gelangt ihrerseits über das Regenerierventil 340 in den Ionentauscher 110. Dabei werden die am Ionentauscher angelagerten Kationen, vorwiegende Kalziumionen und Magnesiumionen, gegen die in der Regeneriermittellösung enthaltenen Natriumionen bzw. Wasserstoffionen ausgetauscht und über das Abwasserventil 330 und einem weiteren Rückflussverhinderer 540 in das Abwasser ausgespült. Um ein Ausströmen von Regeneriermittellösung in den Innenraum (und damit in den Waschtank) der Spülmaschine beim Nachfüllen des Regeneriermittelbehälters 130 mit Regeneriermittel zu minimieren, wird über einen im Regeneriermittelbehälter 130 integrierten Schwimmer 135 die Lösungskonzentration der Regeneriermittellösung sensiert.

Bei Unterschreitung einer definierten Soll-Konzentration startet die Kontrolleinheit einen Auspumpprozess des Regeneriermittelbehälters 130, indem zuerst aufbereitetes Wasser und danach Luft aus der Regenerierwasservorlage 120 mit der Besolungs- und Verdrängungspumpe 160 in den Regeneriermittelbehälter 130 gepumpt wird. Die in den Regeneriermittelbehälter 130 eingebrachte Luft sammelt sich in selbigem und leitet die Regeneriermittellösung mit unterschrittener Soll-Konzentration über das Regenerierventil 340, dem Ionentauscher 110, das Abwasserventil 330 und dem Rückflussverhinderer 540 in das Abwasser ein. Der Auspumpprozess ist dadurch gekennzeichnet, dass er einen Teilprozess eines üblichen Regenerationsprozesses darstellt und nur bei Unterschreitung einer definierten Soll-Konzentration der Regeneriermittellösung aktiviert wird.

Bei weiteren Ausführungsbeispielen können der Regeneriermittelbehälter 130 und der Ionentauscher in einem ersten Bauteil integriert sein. Außerdem können optional der Volumenmesser 510 und die wassertechnische Sicherheitseinrichtung 520 zusammen mit der Regenerierwasservorlage 120 in einem zweiten Bauteil integriert sein.

Somit weisen Ausführungsbeispiele der vorliegenden Erfindung insbesondere die folgenden Vorteile auf. Das in dem Regeneriermittelbehälter 130 eingeleitete Wasser ist aufbereitetes Wasser des beschriebenen Verfahrens einer eingebauten Wasseraufbereitung in der Spülmaschine und weist daher für die vorgesehene Anwendung eine höhere Qualität auf. Der Auspumpprozess des Regeneriermittelbehälters 130 erfolgt als Teilprozess eines üblichen Regenerationsprozesses und wird mit einer Pumpe 160 technisch realisiert.

Die in der Beschreibung, den Ansprüchen und den Figuren offenbarten Merkmale der Erfindung können sowohl einzeln als auch in beliebiger Kombination für die Verwirklichung der Erfindung wesentlich sein.

## Patentansprüche

1. Spülmaschine (100) mit:
einem Anschluss (102) für einen Wasserzulauf;
einem Abwasseranschluss (104);
einem Ionentauscher (110) mit einem Einlass (112), der mit dem Anschluss (102) für den Wasserzulauf verbunden ist, und einem Auslass (114), wobei der Ionentauscher (110) ausgebildet ist, um Wasser aus dem Einlass (112) durch Ionenaustausch aufzubereiten und das aufbereitete Wasser über den Auslass (114) auszugeben;
einer Regenerierwasservorlage (120), die mit dem Auslass (114) verbunden ist, um einen Teil des aufbereiteten Wassers von dem Ionentauscher (110) zu erhalten;
einem Regeneriermittelbehälter (130) für ein Regeneriermittel;
einer Kontrolleineinheit (135); und
einer Pumpe (160), wobei
der Regeneriermittelbehälter (130) mit der Regenerierwasservorlage (120) und dem Ionentauscher (110) verbunden ist und ausgebildet ist, um unter Nutzung des Teils des aufbereiteten Wassers aus der Regenerierwasservorlage (120) das Regeneriermittel als Regenerierlösung dem Ionentauscher (110) zur Regenerierung zuzuführen und **dadurch gekennzeichnet, dass** der Ionentauscher (110) ausgebildet ist, um nach der Regenerierung Reste der Regenerierlösung über den Abwasseranschluss (104) abzuleiten,
wobei die Pumpe (160) ausgebildet ist, um aufbereitetes Wasser aus der Regenerierwasservorlage (120) in den Regeneriermittelbehälter (130) zu pumpen und
bei einer Entleerung der Regenerierwasservorlage (120) Luft in den Regeneriermittelbehälter (130) zu pumpen, um den Regeneriermittelbehälter (130) durch eingepumpte Luft zu entleeren, und
wobei die Kontrolleinheit (135) ausgebildet ist, um die Spülmaschine (100) in einem Entleerungsmodus, in dem die Pumpe (160) den Regeneriermittelbehälter (130) leer pumpt, zu betreiben, wenn eine Regeneriermittelkonzentration in dem Regeneriermittelbehälter (130) unterhalb eines Schwellenwertes gefallen ist.

2. Spülmaschine (100) nach Anspruch 1, die weiter ein Zulaufventil (310), ein Gutwasserventil (320) und ein Abwasserventil (330) aufweist, wobei das Zulaufventil (310) zwischen dem Wasserzulauf und dem Einlass (112) des Ionentauschers (110) angeordnet ist, das Gutwasserventil (320) zwischen dem Ionentauscher (110) und der Regenerierwasservorlage (120) angeordnet ist, und das Abwasserventil (330) zwischen dem Ionentauscher (110) und dem Abwasseranschluss (104) angeordnet ist, so dass über ein Betätigen des Zulaufventils und/oder des Gutwasserventils (320) und/oder des Abwasserventils (330) der Ionentauscher (110) selektiv mit der Regenerierwasservorlage (120) oder dem Abwasseranschluss (104) verbindbar ist.

3. Spülmaschine (100) nach Anspruch 2, die weiter einen Boiler (410) aufweist, der mit dem Gutwasserventil (320) in Flussrichtung des aufbereiteten Wassers hinter dem Gutwasserventil (320) in Verbindung steht, um aufbereitetes Wasser von dem Ionentauscher (110) zu erhalten.

4. Spülmaschine (100) nach Anspruch 3, wobei die Kontrolleinheit ausgebildet ist, um über eine Steuerung der Pumpe (160) und/oder des Zulaufventils (310) und/oder des Gutwasserventils (320) und/oder des Abwasserventils (330) die Spülmaschine (100) selektiv in einem Betriebsmodus oder in einem Besolungsmodus oder in dem Entleerungsmodus zu betreiben,
wobei:
in dem Betriebsmodus die Kontrolleinheit ausgebildet ist, um das Zulaufventil (310) und das Gutwasserventil (320) zu öffnen und das Abwasserventil (330) zu schließen und Wasser aus dem Wasserzulauf dem Ionentauscher (110) zuzuführen und aufbereitetes Wasser dem Boiler (410) und/oder der Regenerierwasservorlage (120) zuzuführen; und
in dem Besolungsmodus die Kontrolleinheit ausgebildet ist, um das Zulaufventil (310) und das Gutwasserventil (320) zu schließen und das Abwasserventil (330) zu öffnen und aufbereitetes Wasser aus der Regenerierwasservorlage (120) in den Regeneriermittelbehälter (130) mit der Pumpe (160) zu pumpen und so die Regenerierlösung dem Ionentauscher (110) zur Regenerierung zuzuführen; und
in dem Entleerungsmodus die Kontrolleinheit ausgebildet ist, um das Zulaufventil (310) und das Gutwasserventil (320) zu schließen und das Abwasserventil (330) zu öffnen und den Teil des aufbereiteten Wassers und
daran anschließend Luft von der Regenerierwasservorlage (120) in den Regeneriermittelbehälter (130) mit der Pumpe (160) zu pumpen, um so den Regeneriermittelbehälter (130) über den Ionentauscher (110) zu entleeren.

5. Spülmaschine (100) nach einem der vorhergehenden Ansprüche, wobei zwischen dem Wasserzulauf und den Ionentauscher (110) ein Volumenmesser (510) und/oder eine wassertechnische Sicherheitseinrichtung (520) und/oder ein Rückflussverhinderer (530) angeordnet sind, wobei der Volumenmesser (510) ausgebildet ist, eine dem Ionentauscher (110) zugeführte Wassermenge zu messen.

6. Spülmaschine (100) nach einem der vorhergehenden Ansprüche, wobei der Ionentauscher (110) ein saurer Kationentauscher ist, der ausgebildet ist, um mittels eines Natriumsalzes oder einer organischen Säure als Regeneriermittel regeneriert zu werden.

7. Spülmaschine (100) nach einem der vorhergehenden Ansprüchen, wobei der Regeneriermittelbehälter (130) eine Messeinrichtung (135) aufweist, um die Regeneriermittelkonzentration in der Regenerierlösung in dem Regeneriermittelbehälter (130) zu messen.

8. Spülmaschine (100) nach dem Anspruch 7, wobei die Messeinrichtung (135) einen Schwimmer und/oder eine elektrische Leitfähigkeitsmesseinrichtung und/oder eine optische Messeinrichtung aufweist.

9. Spülmaschine (100) nach einem der Ansprüche 4 bis 8, wobei zwischen dem Regeneriermittelbehälter (130) und dem Ionentauscher (110) eine fluide Verbindung (232) mit einem Regenerierventil (340) ausgebildet ist, wobei die Kontrolleinheit weiter ausgebildet ist, um das Regenerierventil (340) während des Besolungsmodus und während des Entleerungsmodus zu öffnen.

10. Spülmaschine (100) nach einem der vorhergehenden Ansprüche, wobei die Pumpe (160) eine Besolung- und Verdrängungspumpe ist, die entlang einer weiteren fluiden Verbindung (222) auf einem niedrigeren Niveau als die Regenerierwasservorlage (120) angeordnet ist.

11. Spülmaschine (100) nach einem der Ansprüche 5 bis 10, wobei die Regenerierwasservorlage (120) und/oder die wassertechnische Sicherheitseinrichtung (520) jeweils einen Überlauf aufweisen, wobei der jeweils eine Überlauf mit dem Boiler (410) verbunden ist.

12. Verfahren zur Wasseraufbereitung in einer Spülmaschine (100) mit einer Regenerierwasservorlage (120), einem Regeneriermittelbehälter (130) für ein Regeneriermittel und einem Ionentauscher (110), wobei der Verfahren die folgenden Schritte umfasst:
Aufbereiten von Wasser in dem Ionentauscher (110) durch einen Austausch von Ionen;
Weiterleiten des aufbereiteten Wassers zu der Regenerierwasservorlage (120);
Speichern von aufbereiteten Wasser in der Regenerierwasservorlage (120);
Weiterleiten des aufbereiteten Wassers von der Regenerierwasservorlage (120) zu dem Regeneriermittelbehälter (130); Mischen des Regeneriermittels mit dem aufbereiteten Wasser, so dass eine Regeneriermittellösung erzeugt wird;
Verdrängen des Regeneriermittels durch das aufbereitete Wasser;
Regenerieren des Ionentauschers (110) durch Einleiten der Regeneriermittellösung in den Ionentauscher (110);
Feststellen einer Regeneriermittellösungskonzentration der Regeneriermittellösung in dem Regeneriermittelbehälter (130); und
Entleeren des Regeneriermittelbehälters (130) durch ein Einpumpen von Luft in den Regeneriermittelbehälter (130), wenn die festgestellte
Regeneriermittellösungskonzentration in dem Regeneriermittelbehälter (130) unterhalb eines Schwellenwertes gefallen ist.

13. Verfahren nach Anspruch 12, wobei der Schritt des Entleerens unmittelbar im Anschluss an die Schritte des Weiterleitens des aufbereiteten Wassers von der Regenerierwasservorlage (120) zu dem Regeneriermittelbehälter (130) und des Verdrängens des Regeneriermittels ausgeführt wird.

## Claims

1. A dishwasher (100), comprising:
a connection (102) for a water inlet;
a waste water connection (104);
an ion exchanger (110) having an inlet (112) that is connected to the connection (102) for the water inlet and
having an outlet (114), wherein the ion exchanger (110) is configured to treat water from the inlet (112) by ion exchange and to output the treated water through the outlet (114);
a regenerating water header (120) that is connected to the outlet (114) in order to receive a portion of the treated water from the ion exchanger (110);
a regenerating agent container (130) for a regenerating agent;
a control unit (135); and
a pump (160), wherein
the regenerating agent container (130) is connected to the regenerating water header (120) and the ion exchanger (110) and is configured, by utilizing the portion of the treated water from the regenerating water header (120), to supply the regenerating agent as a regenerating solution to the ion exchanger (110) for regenerating, **characterized in that** the ion exchanger (110) is configured to discharge, after the regeneration, residues of the regenerating solution through waste water connection (104),
wherein the pump (160) is configured to pump treated water from the regenerating water header (120) into the regenerating agent container (130) and to pump air into the regenerating agent container (130) during emptying the regenerating water header (120) in order to empty the regenerating agent container (130) by the air that is pumped in, and
wherein the control unit (135) is configured to operate the dishwasher (100) in an emptying mode in which the pump (160) pumps the regenerating agent container (130) empty if a regenerating agent concentration in the regenerating agent container (130) has fallen below a threshold value.

2. The dishwasher (100) according to claim 1, further comprising a feed valve (310), a clean water valve (320) and a waste water valve (330), wherein the feed valve (310) is arranged between the water inlet and the inlet (112) of the ion exchanger (110), the clean water valve (320) is arranged between the ion exchanger (110) and the regenerating water header (120), and the waste water valve (330) is arranged between the ion exchanger (110) and the waste water connection (104) so that by actuating the feed valve and/or the clean water valve (320) and/or the waste water valve (330), the ion exchanger (110) can be selectively connected to the regenerating water header (120) or the waste water connection (104).

3. The dishwasher (100) according to claim 2, further comprising a boiler (410) that is connected to the clean water valve (320) in the flow direction of the treated water downstream of the clean water valve (320) to receive treated water from the ion exchanger (110).

4. The dishwasher (100) according to claim 3, wherein the control unit is configured to selectively operate the dishwasher (100) in an operating mode or in a brining mode or in the emptying mode via a controller of the pump (160) and/or the feed valve (310) and/or the clean water valve (320) and/or the waste water valve (330),
wherein:
in the operating mode, the control unit is configured to open the feed valve (310) and the clean water valve (320) and to close the waste water valve (330) and to supply water from the water inlet to the ion exchanger (110) and to supply treated water to the boiler (410) and/or the regenerating water header (120); and
in the brining mode, the control unit is configured to close the feed valve (310) and the clean water valve (320) and to open the waste water valve (330) and to pump treated water from the regenerating water header (120) into the regenerating agent container (130) by means of the pump (160) and thus to supply the regenerating solution to the ion exchanger (110) for the regeneration; and
in the emptying mode, the control unit is configured to close the feed valve (310) and the clean water valve (320) and to open the waste water valve (330) and to pump the portion of the treated water and subsequently air by means of the pump (160) from the regenerating water header (120) into the regenerating agent container (130) so as to empty the regenerating agent container (130) through the ion exchanger (110).

5. Dishwasher (100) according to any one of the preceding claims, wherein a volume meter (510) or a water-related safety device (520) and/or a backflow preventer (530) are arranged between the water inlet and the ion exchanger (110), wherein the volume meter (510) is configured to measure an amount of water fed to the ion exchanger (110).

6. Dishwasher (100) according to any one of the preceding claims, wherein the ion exchanger (110) is an acidic cation exchanger which is configured to be regenerated by means of a sodium salt or an organic acid as the regenerating agent.

7. Dishwasher (100) according to any one of the preceding claims, wherein the regenerating agent container (130) has a measuring device (135) for measuring the regenerating agent concentration in the regenerating solution in the regenerating agent container (130).

8. Dishwasher (100) according to claim 7, wherein the measuring device (135) has a float gage and/or an electrical conductivity measuring device and/or an optical measuring device.

9. Dishwasher (100) according to any one of the claims 4 to 8, wherein a fluidic connection (232) with a regenerating valve (340) is formed between the regenerating agent container (130) and the ion exchanger (110), wherein the control unit is further configured to open the regenerating valve (340) during the brining mode and during the emptying mode.

10. Dishwasher (100) according to any one of the preceding claims, wherein the pump (160) is a brine pump and displacement pump which is arranged along a further fluidic connection (222) on a lower level than the regenerating water header (120).

11. Dishwasher (100) according to any one of the claims 5 to 10, wherein the regenerating water header (120) and/or the water-related safety device (520) each have an overflow, wherein each of the respective overflows is connected to the boiler (410).

12. A method for water treatment in a dishwasher (100) comprising a regenerating water header (120), a regenerating agent container (130) for a regenerating agent and an ion exchanger (110), wherein the method comprises the following steps:
treating water in the ion exchanger (110) by exchanging ions;
feeding the treated water to the regenerating water header (120);
storing the treated water in the regenerating water header (120);
feeding the treated water from the regenerating water header (120) to the regenerating agent container (130);
mixing the regenerating agent with the treated water so that a regenerating agent solution is produced;
displacing the regenerating agent by the treated water;
regenerating the ion exchanger (110) by introducing the regenerating agent solution into the ion exchanger (110);
detecting a regenerating agent solution concentration of the regenerating agent solution in the regenerating agent container (130); und
emptying the regenerating agent container (130) by pumping air into the regenerating agent container (130) if the detected regenerating agent solution in the regenerating agent container (130) has fallen below a threshold value.

13. The method according to claim 12, wherein the step of emptying is carried out immediately after the steps of feeding the treated water from the regenerating water header (120) to the regenerating agent container (130) and displacing the regenerating agent.

## Revendications

1. Lave-vaisselle (100) comprenant :
un raccordement (102) pour une arrivée d'eau ;
un raccordement pour l'eau usée (104) ;
un échangeur d'ions (110) avec une admission (112) qui est reliée avec le raccordement (102) d'arrivée d'eau et une sortie (114), étant entendu que l'échangeur d'ions (110) est conçu pour traiter l'eau provenant de l'admission (112) par échange d'ions et délivrer l'eau par la sortie (114) ;
une réserve d'eau de régénération (120) qui est reliée avec la sortie (114) pour recevoir une partie de l'eau traitée par l'échangeur d'ions (110) ;
un réservoir d'agent de régénération (130) pour un agent de régénération ;
une unité de commande (135) ; et
une pompe (160) ;
dans lequel le réservoir d'agent de régénération (130) est relié avec la réserve d'eau de régénération (120) et l'échangeur d'ions (110) et conçu pour amener l'agent de régénération à l'échangeur d'ions (110) en tant que solution de régénération pour la régénération en utilisant la partie de l'eau traitée provenant de la réserve d'eau de régénération (120),
**caractérisé en ce que** l'échangeur d'ions (110) est conçu pour évacuer des résidus de la solution de régénération par le biais du raccordement d'eau usée (104) après la régénération,
étant entendu que la pompe (160) est conçue pour pomper de l'eau traitée à partir de la réserve d'eau de régénération (120) vers le réservoir d'agent de régénération (130) et pomper de l'air dans le réservoir d'agent de régénération (130) lorsque la réserve d'eau de régénération (120) est vide afin de vider le réservoir d'agent de régénération (130) au moyen de l'air pompé,
et
étant entendu que l'unité de commande (135) est conçue pour faire fonctionner le lave-vaisselle (100) dans un mode de vidage dans lequel la pompe (160) pompe le réservoir d'agent de régénération (130) jusqu'à ce qu'il soit vide lorsque la concentration d'agent de régénération dans le réservoir d'agent de régénération (130) est descendue en dessous d'une valeur de seuil.

2. Lave-vaisselle (100) selon la revendication 1, qui présente en outre une vanne d'arrivée (310), une vanne d'eau correcte (320) et une vanne pour l'eau usée (330), étant entendu que la vanne d'arrivée (310) est agencée entre l'arrivée d'eau et l'admission (112) de l'échangeur d'ions (110), que la vanne d'eau correcte (320) est agencée entre l'échangeur d'ions (110) et la réserve d'eau de régénération (120) et que la vanne d'eau usée (330) est agencée entre l'échangeur d'ions (110) et le raccordement d'eau usée (104), de telle sorte que par le biais d'un actionnement de la vanne d'arrivée et/ou de la vanne d'eau correcte (320) et/ou de la vanne d'eau usée (330), l'échangeur d'ions (110) peut être relié de façon sélective avec la réserve d'eau de régénération (120) ou le raccordement d'eau usée (104).

3. Lave-vaisselle (100) selon la revendication 2, qui présente en outre un chauffe-eau (410), qui est en liaison avec la vanne d'eau correcte (320) dans la direction du flux de l'eau traitée en aval de la vanne d'eau correcte (320) afin de recevoir de l'eau traitée provenant de l'échangeur d'ions (110).

4. Lave-vaisselle (100) selon la revendication 3, dans lequel l'unité de commande est conçue pour faire fonctionner le lave-vaisselle (100) de façon sélective dans un mode d'utilisation ou dans un mode de saumurage ou dans le mode de vidage par le biais d'une commande de la pompe (160) et/ou de la vanne d'arrivée (310) et/ou de la vanne d'eau correcte (320) et/ou de la vanne d'eau usée (330),
étant entendu que :
- dans le mode d'utilisation, l'unité de commande est conçue pour ouvrir la vanne d'arrivée (310) et la vanne d'eau correcte (320) et fermer la vanne d'eau usée (330), pour amener de l'eau provenant de l'arrivée d'eau à l'échangeur d'ions (110) et pour amener de l'eau traitée au chauffe-eau (410) et/ou à la réserve d'eau de régénération (120) ; et
- dans le mode de saumurage, l'unité de commande est conçue pour fermer la vanne d'arrivée (310) et la vanne d'eau correcte (320) et ouvrir la vanne d'eau usée (330), pour pomper de l'eau traitée provenant de la réserve d'eau de régénération (120) dans le réservoir d'agent de régénération (130) avec la pompe (160) et pour amener ainsi la solution de régénération à l'échangeur d'ions (110) aux fins de la régénération ; et
- dans le mode de vidage, l'unité de commande est conçue pour fermer la vanne d'arrivée (310) et la vanne d'eau correcte (320) et ouvrir la vanne d'eau usée (330) et pour pomper la partie de l'eau traitée, puis de l'air à partir de la réserve d'eau de régénération (120) dans le réservoir d'agent de régénération (130) avec la pompe (160) afin de vider ainsi le réservoir d'agent de régénération (130) par le biais de l'échangeur d'ions (110).

5. Lave-vaisselle (100) selon l'une des revendications précédentes, dans lequel un dispositif de mesure de volume (510) et/ou un dispositif de sécurité technique lié à l'eau (520) et/ou un dispositif antiretour (530) sont agencés entre l'arrivée d'eau et l'échangeur d'ions (110), étant entendu que le dispositif de mesure de volume (510) est conçu pour mesurer une quantité d'eau amenée à l'échangeur d'ions (110).

6. Lave-vaisselle (100) selon l'une des revendications précédentes, dans lequel l'échangeur d'ions (110) est un échangeur de cations acide qui est conçu pour être régénéré au moyen d'un sel de sodium ou d'un acide organique en tant qu'agent de régénération.

7. Lave-vaisselle (100) selon l'une des revendications précédentes, dans lequel le réservoir d'agent de régénération (130) présente un dispositif de mesure (135) pour mesurer la concentration d'agent de régénération dans la solution de régénération dans le réservoir d'agent de régénération (130).

8. Lave-vaisselle (100) selon la revendication 7, dans lequel le dispositif de mesure (135) présente un flotteur et/ou un dispositif de mesure de la conductivité électrique et/ou un dispositif de mesure optique.

9. Lave-vaisselle (100) selon l'une des revendications 4 à 8, dans lequel une liaison fluide (232) est réalisée avec une vanne de régénération (340) entre le réservoir d'agent de régénération (130) et l'échangeur d'ions (110), étant entendu que l'unité de commande est également conçue pour ouvrir la vanne de régénération (340) pendant le mode de saumurage et pendant le mode de vidage.

10. Lave-vaisselle (100) selon l'une des revendications précédentes, dans lequel la pompe (160) est une pompe de saumurage et volumétrique qui est agencée le long d'une liaison fluide supplémentaire (222) à un niveau plus bas que la réserve d'eau de régénération (120).

11. Lave-vaisselle (100) selon l'une des revendications 5 à 10, dans lequel la réserve d'eau de régénération (120) et/ou le dispositif de sécurité technique lié à l'eau (520) présentent respectivement un trop-plein, étant entendu que chaque trop-plein est relié avec le chauffe-eau (410).

12. Procédé de production d'eau chaude dans un lave-vaisselle (100) comprenant une réserve d'eau de régénération (120), un réservoir d'agent de régénération (130) pour un agent de régénération et un échangeur d'ions (110), étant entendu que le procédé comprend les étapes suivantes :
- traitement d'eau dans l'échangeur d'ions (110) par un échange d'ions ;
- acheminement de l'eau traitée à la réserve d'eau de régénération (120) ;
- stockage d'eau traitée dans la réserve d'eau de régénération (120) ;
- acheminement de l'eau traitée de la réserve d'eau de régénération (120) au réservoir d'agent de régénération (130) ;
- mélange de l'agent de régénération avec l'eau traitée de façon à produire une solution d'agent de régénération ;
- refoulement de l'agent de régénération par l'eau traitée ;
- régénération de l'échangeur d'ions (110) par l'introduction de la solution d'agent de régénération dans l'échangeur d'ions (110) ;
- détermination d'une concentration de solution d'agent de régénération dans la solution d'agent de régénération dans le réservoir d'agent de régénération (130) ; et
- vidage du réservoir d'agent de régénération (130) par le pompage d'air dans le réservoir d'agent de régénération (130) lorsque la concentration de solution d'agent de régénération déterminée dans le réservoir d'agent de régénération (130) est descendue en dessous d'une valeur de seuil.

13. Procédé selon la revendication 12, dans lequel l'étape du vidage est exécutée directement après les étapes de l'acheminement de l'eau traitée depuis la réserve d'eau de régénération (120) vers le réservoir d'agent de régénération (130) et du refoulement de l'agent de régénération.
